# EUROPÄISCHE PATENTSCHRIFT

(11) **EP 1 846 160 B1**
(45) Veröffentlichungstag und Bekanntmachung des Hinweises auf die Patenterteilung: **11.08.2010**
(21) Anmeldenummer: 05824664.6
(22) Anmeldetag: 23.12.2005
(51) Int. Cl.: B01L 3/00

(54) **NEUARTIGE MIKROFLUIDISCHE PROBENTRÄGER**
NOVEL MICROFLUIDIC SAMPLE HOLDER
NOUVEAUX PORTE-ECHANTILLONS MICROFLUIDIQUES

(30) Priorität: 23.12.2004 DE 102004063438
(43) Veröffentlichungstag der Anmeldung: 24.10.2007
(73) Patentinhaber: Backes, Perdita, 53424 Remagen (DE); Backes, Oktavia, 53424 Remagen (DE)
(72) Erfinder: Backes, Perdita, 53424 Remagen (DE); Backes, Oktavia, 53424 Remagen (DE)
(74) Vertreter: Köllner, Malte
(86) Internationale Anmeldenummer: PCT/EP2005/014000
(87) Internationale Veröffentlichungsnummer: WO 2006/069757

(56) Entgegenhaltungen:
- EP-A- 1 508 373
- WO-A-02/41995
- WO-A-99/46045
- WO-A-2005/070546
- US-A1- 2003 031 593
- US-A1- 2004 209 381
- US-B1- 6 296 020

## Beschreibung

### Gebiet der Erfindung

Die Erfindung betrifft einen neuartigen Probenträger mit mindestens einer Probenaufnahmekammer für eine Probenflüssigkeit, mindestens einem Verteilerkanal, der mit der mindestens einen Probenaufnahmekammer verbunden ist, wobei sich von jeder Probenaufnahmekammer mindestens ein Verteilerkanal erstreckt, mindestens einer Reaktionskammer, in die gegebenenfalls ein von dem mindestens einen Verteilerkanal abzweigender Zulaufkanal mündet, und mindestens einer Entlüftungsöffnung für jede Reaktionskammer. Derartige Probenträger dienen vorwiegend der Verwendung in der mikrobiologischen Diagnostik, der Immunologie, der PCR, der klinischen Chemie, der Mikroanalytik und/oder der Prüfung von Wirkstoffen. Weiterhin betrifft die Erfindung Verfahren zur Analyse einer Probensubstanz, in denen der Probenträger zum Einsatz kommt sowie Kitts, die den Probenträger enthalten.

### Stand der Technik

Die enormen Fortschritte bei der Entwicklung von Biochips eröffnen auch in der medizinischen Diagnostik neue Dimensionen. Dabei kommt angesichts der wachsenden Finanzierungsprobleme im Gesundheitswesen vor allem dem Aspekt der möglichen Kosteneinsparung besondere Bedeutung zu. Die wissenschaftliche und technische Entwicklung hat in den vergangenen Jahren viele Ansätze hervorgebracht, wie diagnostische Fragestellungen mit Hilfe von Multiparametertests umgesetzt werden können. Am weitesten ist dabei die Entwicklung auf dem Gebiet der so genannten Biochips gediehen, insbesondere im Bereich der DNA-Chips. Parallel dazu wurden andere Testformate entwickelt, zum Beispiel Bead-Technologien und mikrofluidische Systeme.

Unter Mikrofluidik wird im allgemeinen die Handhabung und der Umgang mit sehr kleinen Flüssigkeitsmengen (zum Beispiel Mikroliter, Nanoliter oder sogar Picoliter) verstanden. Es können verschiedenen Methoden zur gezielten Bewegung der Flüssigkeiten verwendet werden:
- Elektrokinetik
- Druck
- Kapillarität

Diese können einzeln aber auch kombiniert angewendet werden. Der elektrokinetische Fluss wird dabei durch das Anlegen elektrischer Spannung an die Kanäle erreicht. Die auftretenden Phänomene, bekannt als Elektroosmose und Elektrophorese, führen zur Bewegung von geladenen Molekülen. Im Gegensatz dazu können durch Anlegen von Drücken (zum Beispiel durch Mikropumpen) auch ungeladene Moleküle und z. B. Zellen bewegt werden. Neben diesen aktiven Methoden wird zunehmend die passive Bewegung verwendet. Hierbei können durch Ausnutzung der Kapillarkraft die Flüssigkeiten gezielt bewegt werden. Ein wesentlicher Vorteil dieser Technik ist es, dass sie ohne weitere Antriebsmechanismen auskommt und somit eine deutliche Vereinfachung des Gesamtsystems ermöglicht.

Weltweit gesehen konzentrieren sich die meisten Lösungsansätze auf "aktiven Elemente" zum Transport von Flüssigkeiten. Die dazu notwendigen Strukturen werden überwiegend durch Laserablation oder durch Heißprägung oder Spritzguss hergestellt. Dies engt in vielen Fällen die Möglichkeiten der Strukturgebung ein. In Deutschland existieren bereits erste Lösungsansätze zum passiven Transport von Flüssigkeiten. In diesen Fällen wird das Formteil bislang durch Mikrospritzguss hergestellt und die zum Transport von Flüssigkeiten erforderliche Energie durch Hydrophilierung der Oberfläche mittels Plasmabehandlung bereitgestellt. Ein Nachteil dieser Technik ist die Tendenz dünner hydrophilierter Schichten zur Anisotrophie der Oberflächen (Altern durch "hydrophobic recovery") und ihre relativ hohe Empfindlichkeit gegenüber Chemikalien und Lösungsmitteln. Eine Alternative kann ein auf Photolithografie beruhendes Verfahren bieten. Hierbei werden die Strukturen mit Hilfe optischer Masken durch Lichtpolymerisierung von Acrylaten hergestellt. Durch Zugabe geeigneter vernetzbarer organischer Substanzen lassen sich Kopolymere mit gezielten Oberflächeneigenschaften herstellen. Außerdem erlaubt dieses Verfahren die Herstellung dreidimensionaler Strukturen, die mit anderen Verfahren nicht oder nur mit nicht vertretbarem Kostenaufwand zu realisieren sind. Ein solcher Probenträger, der zum Transport von Probenflüssigkeit lediglich Kapillarkräfte benutzt, ist zum Beispiel aus der WO 99/46045 bekannt. Hierbei handelt es sich um Plastikchips, die im Mikrospritzgussverfahren hergestellt werden und anschließend durch Plasmabehandlung oder Pfropfung Oberflächen modifiziert (hydrophiliert) werden. Diese Verfahren sind kostenaufwändig und haben eine Reihe von Nachteilen:
1. Die Oberflächenmodifikation ist wegen "hydrophobic recovery" nicht ausreichend lange haltbar und zudem ist die Homogenität in dreidimensionaler Richtung nicht kontrollierbar.
2. Eine zu hohe Hydrophilierung bewirkt insbesondere bei der Konfektionierung von Tests eine ungewünschte Rückkapillarisierung von Stoffen in den Zulauf und die Entlüftungskapillaren mit der Gefahr der Verstopfung der Kapillaren. Der Probenträger wird so unbrauchbar.
3. An den Einlaufstellen in die Testvertiefungen kann es leicht (insbesondere bei ungenügender Versiegelung oder Verwendung hydrophiler Klebstoffe) zu einer Kapillarbildung zwischen den Wänden der Vertiefung und dem Deckel kommen, mit der Folge, dass die Vertiefung nicht oder nicht vollständig gefüllt wird, da die Flüssigkeit direkt in die Entlüftungsstruktur fließt und diese befüllt, sodass benachbarte Vertiefungen wegen fehlender Entlüftung nicht mehr gefüllt werden können. Außerdem kann das Fluid in einem solchen Fall über die Außenkante des Probenträgers in weitere, zu anderen Tests gehörende Entlüftungsstrukturen, kapillarisieren.
4. Eine hohe, freie Oberflächenenergie des Probenträgers, die den Transport von Fluiden in die Testvertiefung gewährleisten soll, ist außerdem sehr empfindlich gegenüber Tensiden in Fluiden, da die oben beschriebenen Fehler hierbei verstärkt auftreten. Dadurch werden viele Anwendungsmöglichkeiten ausgeschlossen, da insbesondere nichtionische Tenside in vielen diagnostischen Assays (Immunoassay, DNA-Assays, klinischen Chemie) unverzichtbar sind.
5. Der oben beschriebene Probenträger ist nur für Einschrittassays brauchbar.

Mikrofluidische Chips bzw. Probenträger bieten die Möglichkeit, diagnostische Verfahren massiv zu verkleinern und gleichzeitig den Probendurchsatz zu erhöhen. Auf Grund der Verkleinerung sind schnellere Reaktionen, höhere Sensitivitäten und bessere Kontrolle über die Abläufe im Vergleich zu herkömmlichen Verfahren zu erzielen. Die Entwicklung eines zuverlässig funktionierenden mikrofluidischen Chips bzw. Probenträgers ist somit ein entscheidender Meilenstein auf dem Weg zu einem innovativen, miniaturisierten Diagnostiksystem.

Mikrofluidische Chips bzw. Probenträger enthalten dreidimensionale Elemente von sehr unterschiedlicher Dimensionierung. So muss zum Beispiel am Übergang von Kapillare und der "Reaktionskavität" die laminare Flüssigkeitsströmung zum Boden des Gefäßes gerichtet sein, um dies vollständig zu füllen. Auf Grund weiterer Kapillaritäten, die unter anderem durch den Deckel und die Seitenwände des Reaktionsgefäßes gebildet werden, besteht jedoch die Möglichkeit anderer Strömungsrichtungen. Daher wird an diesem Übergang eine chaotische Strömung erwartet, die nicht zu kontrollieren ist. Eine mikrofluidische Struktur, die zuverlässig - auch unter widrigsten Bedingungen - eine komplette Füllung der Reaktionskavitäten garantiert, ist somit zwingend erforderlich aber bislang nicht vorhanden.

### Aufgabe

Die Erfindung stellt sich die Aufgabe, einen neuartigen Probenträger, Verfahren zur Analyse einer Probensubstanz unter Einsatz des neuartigen Probenträgers sowie Kitts enthaltend den neuartigen Probenträger bereitzustellen, die die im Stand der Technik vorhandenen Nachteile überwinden helfen, insbesondere die Befülldynamik verbessern, die Fehleranfälligkeit vermindern, durch einfache und kostengünstige Vorrichtungen die Möglichkeit schaffen, Ein- oder z.B. Mehrschrittassays durchzuführen und die spezifisch und sensitiv genug sind, einen schnellen, quantitativen Nachweis der Probensubstanz zu gewährleisten.

### Lösung

Diese Aufgabe wird durch die Erfindung mit den Merkmalen des unabhängigen Anspruchs gelöst. Vorteilhafte Weiterbildungen der Erfindung sind in den Unteransprüchen gekennzeichnet. Der Wortlaut sämtlicher Ansprüche wird hiermit durch Bezugnahme zum Inhalt dieser Beschreibung gemacht.

Durch eine Reihe von Maßnahmen, die sich sowohl auf die Geometrie der Strukturen, der Anordnung gewisser Strukturelemente, der Nutzung von Gradienten der freien Oberflächenenergie in vertikaler Richtung als auch auf die zur Anwendung geeigneten, nicht ionischen Tenside in den Probenflüssigkeiten bzw. bei der Testkonfektionierung beziehen, konnte ein verbesserter mikrofluidischer Probenträger bereitgestellt werden. Dabei wurden insbesondere folgende Schwerpunkte gesetzt:
- Neuartiges Design der Verteilungs- und Belüftungskanäle
- Studium des Einflusses spezieller Dimensionen (Höhe der Strukturen)
- Neuartiges Design der Kapillar-Stopp-Strukturen
- Studium des Einflusses der Oberflächenenergie der Flüssigkeit auf das Fließverhalten
- Statistische Analyse der Füllzeit

Im folgenden werden einzelne Verfahrensschritte näher beschrieben. Die Schritte müssen nicht notwendigerweise in der angegebenen Reihenfolge durchgeführt werden, und das zu schildernde Verfahren kann auch weitere, nicht genannte Schritte aufweisen.

Es wird ein Probenträger mit mindestens einer Probenaufnahmekammer für eine Probenflüssigkeit, mindestens einem Verteilerkanal, der mit der mindestens einen Probenaufnahmekammer verbunden ist, wobei sich von jeder Probenaufnahmekammer mindestens ein Verteilerkanal erstreckt, mindestens einer Reaktionskammer, in die ein von dem mindestens einen Verteilerkanal abzweigender Zulaufkanal mündet sowie mindestens einer Entlüftungsöffnung für jede Reaktionskammer bereitgestellt. Dieser Probenträger weist zwischen der Probenaufnahmekammer, dem Verteilerkanal, der Reaktionskammer, dem Zulaufkanal und/oder dem Entlüftungskanal mindestens eine weitere zusätzliche Struktur auf, die zumindest teilweise hydrophob ausgestaltet ist. Diese Struktur, die auf der einen Seite das Entweichen der von der einströmenden Flüssigkeit (Probenaufnahmekammer → Verteilerkanal → Reaktionskammer) verdrängten Luft ermöglichen und zum anderen die Kapillarwirkung aufheben bzw. stark verlangsamen (Kapillarstop) soll, können ggf. auch komplett hydrophob ausgestaltet werden. Diese Strukturen können vorzugsweise von relativ geringer Größe sein, beispielsweise kann jede weitere Struktur einen Querschnitt von 10 µm bis 300 µm, vorzugsweise 50 µm bis 200 µm, insbesondere 100 µm bis 150 µm, haben. In diesem Zusammenhang ist es wichtig darauf hinzuweisen, dass diese Strukturen auf keinen Fall so klein ausgewählt sein dürfen, dass sie bei Auftragen eines Deckelkörpers, wie er später beschrieben wird, verstopfen. Eine Versiegelung des Probenträgers (gegebenenfalls nach Einbringen von Reagenzien) ist für eine ausreichende Kapillarkraft zum passiven Transport von Probenflüssigkeiten in mikrofluidischen Probenträger von Bedeutung, wobei der Probenträger beim Auftragen des Deckelkörpers durch ein gegebenenfalls verwendetes Mittel, beispielsweise ein Klebstoff, nicht verstopft werden soll.

In einer bevorzugten Ausführungsform handelt es sich bei der zusätzlichen Struktur um eine halbkreisförmige Vertiefung, die vorzugsweise diagonal gegenüber dem Verteilerkanal angeordnet ist. Von dieser halbkreisförmigen Vertiefung erstreckt sich vorzugsweise mindestens eine weitere Kapillare, wobei die weitere Kapillare scharf abgewinkelt, vorzugsweise mit einem Winkel ≥ 90 Grad, und/oder zickzackförmig ausgestaltet ist. Diese weitere Kapillare, die sich an der Wand des Verteilerkanals befinden kann, verlangsamt den Flüssigkeitsstrom oder bringt ihn auf Grund der Kapillarstruktur zum stehen. Ausgehend von dieser weiteren Kapillare erstreckt sich in einer weiteren bevorzugten Ausführungsform mindestens ein weiteres, scharfkantiges und eine wechselnde Strukturtiefe aufweisendes Element, dass die vorgenannten Effekte verstärken kann. Günstig ist es, wenn sich von dem scharfkantigen und eine wechselnde Strukturtiefe aufweisendem Element mindestens eine weitere Kapillare erstreckt, wobei die weitere Kapillare entweder direkt oder über eine benachbarte Struktur in eine endständige Vertiefung mit Ventilfunktion mündet. Bei dieser benachbarten Struktur kann es sich beispielsweise um einen gemeinsamen Hauptentlüftungskanal handeln, der in mindestens einer Entlüftungsöffnung mündet. Ist diese weitere Kapillare zum Beispiel unter Zuhilfenahme eine Folie versiegelt worden, findet kein Druckausgleich statt, sodass sich (alle) Kapillarkräfte im wesentlichen aufheben. Sofern die Versiegelung geöffnet wird (beispielsweise durch einstechen der Folie oder Nutzung eines fokalen Lasers) erfüllt die Struktur ihre Zweckbestimmung, d. h. die Befüllung Mithilfe von Kapillarkräften setzt ein bzw. setzt sich fort. Die Entlüftungsstruktur kann auch von einem Verteilerkanal und/oder einem Zulaufkanal ausgehen, die verschiedene Strukturen, beispielsweise die Probenaufnahmekammer, den Verteilerkanal, die Reaktionskammer, die Zulaufkanäle, die zusätzlichen Strukturen etc. miteinander verbinden, bei dem die Entlüftungsstruktur/Entlüftungsöffnung zunächst geschlossen ist. In diesem Fall endet die geöffnete Entlüftungsstruktur der ersten Testvertiefung (z.B. erste Reaktionskammer) seitlich dazu. Wird nun darauf eine Probensubstanz aufgetragen, so füllt sich die erste Vertiefung, sodass der erste Schritt einer Reaktion ablaufen kann. Danach wird das Entlüftungssystem der zweiten Testvertiefung (z.B. zweite Reaktionskammer), die vorzugsweise ein geringeres Volumen hat, geöffnet und mit der nun veränderten Probensubstanz aus der ersten Vertiefung gefüllt. Ein zweiter Schritt einer Reaktion kann ablaufen.

Erfindungsgemäß liegt der Verteilerkanal und/oder Zulaufkanal in seinem oberen Bereich in einer Ebene mit der Entlüftungsöffnung. Vorzugsweise ist in diesem Bereich der Zulaufkanal hydrophob ausgestaltet. Der untere Bereich des Zulaufkanals, d. h. der Bereich, der unterhalb der Ebene der Entlüftungsöffnung liegt, ist hydrophil ausgestaltet. Alternativ dazu kann lediglich der Boden des Zulaufkanals aus hydrophilerem Material (im Vergleich zu dem verwendeten Material im oberen Bereich) gefertigt sein. In der WO99/46045 erfolgt die Probenverteilung über einen Verteilerkanal, der von einer Probenauftragsstelle ausgeht und von dem Zulaufkanäle zu den Testvertiefungen (beispielsweise Reaktionskammern) abzweigen. Solche Systeme zur Probenverteilung sind auch aus anderen Anwendungen bekannt, jedoch sind diese Systeme aus den oben erwähnten Gründen ungeeignet, eine adäquate Befülldynamik zu gewährleisten. Darum können vorzugsweise die Zulaufkanäle und/oder die Verteilerkanäle auch einzeln von der Probenaufnahmekammer ausgehen. Weiterhin kann zum Beispiel der Verteilerkanal, der mit der Probenaufnahmekammer verbunden ist, vorzugsweise mäanderförmig ausgestaltet und unmittelbar (d. h. ohne Zwischenschaltung eines von ihm abzweigenden Zulaufkanals) mit der Probenaufnahmekammer verbunden sein. Selbstverständlich kann die Funktion des Verteilerkanals von einem gegebenenfalls vorhandenen Zulaufkanal übernommen oder ergänzt werden, sodass mäanderförmige Ausgestaltungen des Verteilerkanals und/oder des Zulaufkanals ebenfalls von der Erfindung umfasst sind. Weiterhin können vorzugsweise mehrere Entlüftungsöffnungen, Verteilerkanäle, ggf. vorhandene Zulaufkanäle, Reaktionskammern und/oder zusätzliche Strukturen um die Probenaufnahmekammer oder parallel zu dieser angeordnet sein. Solche Ausgestaltungen umfassen beispielsweise "Medusenformen", wobei die Funktion des "Medusenkopfes" durch die Probenaufnahmekammer und die "Medusententakeln" durch die Verteiler- und/oder Zulaufkanäle übernommen werden. Erfindungsgemäß ist ebenfalls vorgesehen, dass die Probenaufnahmekammer zentral in Form eines Kreises oder einer Ellipse oder einer länglichen Struktur (sogenannte "Gliederfüßlerstruktur") geformt ist und von dieser die Verteiler- und/oder Zulaufkanäle (bzw. die zusätzlichen Strukturen) abgehen. Anordnungen, die Zwei- oder Mehrschrittassays ermöglichen, können entsprechend angeordnet sein.

Bei einer vorteilhaften Weiterbildung der Erfindung weist die Reaktionskammer eine vertikale Ausdehnung von 500 µm bis 3 mm, vorzugsweise 1 mm bis 2,5 mm, insbesondere 1,5 mm bis 2 mm, auf. Die Kantenlänge der Reaktionskammer weist vorzugsweise einen Durchschnitt von 300 µm bis 1 mm, vorzugsweise 500 µm bis 750 µm, insbesondere 500 µm bis 600 µm, auf. Der Querschnitt der Reaktionskammer ist vorzugsweise in seinem Querschnitt rund, birnenförmig, hexaedrisch, oktaedrisch und/oder rechteckig ausgestaltet. Vorzugsweise weist die Reaktionskammer im Bodenbereich eine vertikal verlaufende und abgerundete Einlaufkapillare auf, die vorzugsweise einen Radius von 5 µm bis 50 µm, insbesondere 10 µm bis 20 µm, hat. Eine spitzwinklige Einlaufkapillare scheint weniger gut geeignet zu sein, da deren scharfen Kanten wie ein Kapillarstop wirken und den Flüssigkeitsstrom zumindest verlangsamen (bzw. gänzlich zum erliegen bringen). Günstig ist es, wenn die Reaktionskammer eine Einbuchtung aufweist, die vorzugsweise diagonal gegenüber der Einlaufkapillare angeordnet ist und zu mindestens einer Entlüftungsöffnung führt.

Erfindungsgemäß kann die Reaktionskammer in ihrem oberen, in einer Ebene mit dem hydrophoben Teil des Verteilerkanals und/oder Zulaufkanals liegenden Bereichs, hydrophob ausgestaltet sein, während sie in ihren unteren, unterhalb des hydrophoben Bereichs des Verteilerkanals und/oder Zulaufkanals liegenden Bereichs, hydrophil ausgestaltet ist. Selbstverständlich kann hierbei erneut die Funktion des Zulaufkanals von einem Verteilerkanal übernommen oder ergänzt werden, wie generell darauf hinzuweisen ist, dass in sämtlichen Ausführungsformen der Erfindung Verteiler- bzw. Zulaufkanal sich ergänzen können, d.h. der Probenträger weist sowohl mindestens einen Verteilerkanal als auch mindestens einen Zulaufkanal auf, oder die Funktion von Verteiler- oder Zulaufkanal wird von mindestens einem Kanal übernommen, d.h. der Probenträger weist entweder nur mindestens einen Verteilerkanal oder nur mindestens einen Zulaufkanal auf. Weiterhin werden beliebige Kombinationen zwischen Reaktionskammer, Zulaufkanal und/oder Verteilerkanal von der Erfindung umfasst. Wie beschrieben, sieht die Erfindung vor, dass der untere Bereich der Reaktionskammer hydrophil ausgestaltet ist, und zwar vorzugsweise derart, das die Hydrophilierung schichtweise zunimmt. Unter bestimmten Bedingungen kann es jedoch erforderlich sein, den unteren Teil der Reaktionskammer zumindest teilweise (ebenfalls) hydrophob auszugestalten. Dies ist beispielsweise dann von Vorteil, wenn Lösungen zur Trocknung aufgebracht werden, die zur Verbesserung der Löslichkeit von Probensubstanzen Detergenzien enthalten, was bei hydrophilen Oberflächen zu starken Rückkapillarisierungen führen kann. Um diese Effekte zu vermeiden kann die Reaktionskammer erfindungsgemäß durchgängig hydrophob ausgestaltet sein. Durch das Trocknen der Lösung bilden die Detergenzien dann einen hydrophilen Film auf der hydrophoben Oberfläche. Vorzugsweise weist die Reaktionskammer mindestens eine abgerundete Ecke auf. Auch können alle Ecken der Reaktionskammer (mit Ausnahme der die Einlaufkapillare aufweisende Ecke) abgerundet sein. Durch diese Ausgestaltung der Ecken der Reaktionskammer wird die Kapillarkraft stark gehemmt, was die Befülldynamik nochmals stark verbessert (Radius ≥ 100 µm). Weiterhin ist erfindungsgemäß vorgesehen, dass die Reaktionskammer glatte und/oder wellig ausgestaltete Seitenwände aufweist. Hierbei können die wellig ausgestalteten Seitenwände (Radius vorzugsweise ca. 30 µm bis 50 µm) als vertikale Kapillaren wirken, bei gleichzeitiger Vergrößerung der Oberfläche durch die Wellenstruktur. Durch diese Anordnung können beim Einbringen von Probensubstanzen in Lösung diese schnell und gleichmäßig auf eine größere Oberfläche verteilt werden, um so den Trocknungsprozess zu beschleunigen, bei gleichzeitiger "Entlastung" der Einlaufkapillare. Auch die Wiederlöslichkeit bei Zugabe der Probensubstanz wird verbessert. Die Wellenstruktur der Seitenwände kann sich über verschiedene Bereiche der Wände erstrecken. So kann z.B. die Wellenstruktur sich in der Nähe der Einlaufkapillare vom Boden bis zum Deckel erstrecken, während sie in der Nähe der Entlüftungsstruktur ganz fehlt. Es hat sich gezeigt, dass bei einer solchen Verteilung der Wellenstruktur die einlaufende Flüssigkeit im Bereich der Einlaufkapillare und der durchgehenden Wellenstruktur den Deckelkörper benetzt und der Verzögerungseffekt im übrigen Teil so stark ist, dass die Luft genügend Zeit hat zu entweichen. Zackenstrukturen scheinen von Nachteil zu sein, da sie nicht bis zum Boden geführt werden können, weil sie die Benetzung des Bodens stören würden.

Bei einer weiteren vorteilhaften Weiterbildung der Erfindung ist vorgesehen, dass der Probenträger durch einen Deckelkörper flüssigkeitsdicht abgedeckt wird. Wie schon erwähnt, ist neben der geeigneten Geometrie der Kapillaren eine ausreichend gute Versiegelung des Probenträgers (ggf. nach Einbringung der Probensubstanzen bzw. Reagenzien) von Bedeutung, um eine ausreichende Kapillarkraft zum passiven Transport von Probenflüssigkeiten in mikrofluidischen Probenträgern zu erreichen. Vorzugsweise handelt es sich bei dem Deckelkörper um eine Folie, die einseitig mit einer Klebstoffschicht geeigneter Dicke versehen ist. Bei der Folie und/oder dem Klebstoff handelt es sich vorzugsweise um hitzeaktive und/oder drucksensitive Folien bzw. Klebstoffe. Man ging bislang davon aus, dass stark hydrophobe Klebstoffe (z.B. Silikon, Kautschuk oder Silikon-Kautschukkleber) die Fluidik in den Kapillaren stören, da die genannten Klebstoffe noch hydrophober sind als nicht oberflächenbehandelte Kunststoffe, die üblicherweise in der Diagnostik oder Medizintechnik eingesetzt werden (Polystyrol, Polypropylen, Polycarbonat, PMMA). Es ist ein Verdienst der vorliegenden Erfindung aufzuzeigen, dass gerade diese Klebstoffe besonders geeignet sind zur Versiegelung mit einem Deckelkörper. Daher wird in einer besonders bevorzugten Ausführungsform als Folie eine Fluorpolymerfolie verwendet, da deren nicht beschichtete, dem Probenträger abgewandte Oberfläche sehr hydrophob ist, gute Gleiteigenschaften besitzt und, was bei optischen Messverfahren von Vorteil ist, stark schmutzabweisende Eigenschaften besitzt. Die Folie wird vorzugsweise unter Druck, vorzugsweise bei 2 bis 5 bar, mittels Walzen so aufgebracht, dass der Probenträger eine lückenlose Abdeckung aufweist. Bei den Klebstoffen handelt es sich vorzugsweise um Kohäsionskleber. Kohäsionskleber besitzen die Eigenschaft, unter Druck in "Freiräume" auszuweichen. Dieses wird zum Beispiel im Alltag benutzt um Spalten zu verfugen. Diesen Effekt kann man bei der Versiegelung (sofern der Druck nicht zu groß und die Kleberschicht nicht zu dick ist) vorteilhaft nutzen, um unerwünschte Kapillarkräfte zwischen Seitenwänden und Verdeckelung zu unterbinden. Es hat sich gezeigt, dass sich bei der Versiegelung des Probenträgers an diese Stelle "Mikrowülste" ausbilden, die zusammen mit den hydrophoben Eigenschaften diesen Effekt (Kapillarisierung zwischen Seitenwänden und Deckel) unterbinden. Außerdem wird die Klebeschicht nur mit Verzögerung benetzt, sodass beim Befüllen der Testvertiefungen (z.B. Probenaufnahmekammer, Reaktionskammer etc.) die Luft genügend Zeit hat, auf der der Befüllseite gegenüberliegenden Entlüftungsstruktur zu entweichen, bevor diese von der Probenflüssigkeit erreicht wird und dann Luftblasen in der Testvertiefung (z.B. Probenaufnahmekammer, Reaktionskammer etc.) eingeschlossen würden. Als besonders geeignetere Klebstoffe haben sich hydrophobe Klebstoffe erwiesen. Solche Klebstoffe sind z.B. die schon erwähnten Silikon, Kautschuk, Silikon-Kautschuk und/oder Fluorpolimer-Klebstoffe.

In einer weiteren bevorzugten Ausführungsform der Erfindung werden die erfindungsgemäßen Probenträger in der mikrobiologischen Diagnostik, der Immunologie, der PCR (polymerase chain reaction, Polymerase-Kettenreaktion), der klinischen Chemie, der Mikroanalytik und/oder der Prüfung von Wirkstoffen verwendet.

Weiterhin ist erfindungsgemäß ein Verfahren zur Analyse mindestens einer Probensubstanz vorgesehen, bei dem ein Probenmedium mit mindestens einem Tensid versetzt und auf einem erfindungsgemäßen Probenträger aufgetragen wird. Dieses Tensid ist vorzugsweise ein nichtionisches Tensid. Dieses nichtionische Tensid ist vorzugsweise eine Substanz, deren HLB-Zahl (hydrophilic-lipophilic-balance) zwischen 9 bis 13 liegt. Solche Tenside sind vorzugsweise Propylenoxid/Ethylenoxid Triblockpolymere, Alkylpolyglykoside, Nonylphenylethoxylate, Sekundäralkoholethoxylate, Octylphenylethoxylate, Polyethylenlauryläther und/oder Sorbitanester. Weitere Beispiele für nichtionische Tenside sind dem Fachmann bekannt und können aus der entsprechenden Fachliteratur entnommen werden. Beispiele für Tenside aus den genannten Gruppen sind beispielsweise:
- Pluronic 10300 (von BASF) aus der Gruppe der Propylenoxid/Ethylenoxid Triblockpolymere
- Glucopon 650 (von Cognis) aus der Gruppe der Alkylpolyglykoside
- Tergitol NP 7 und Tergitol NP 9 (von DOW Chemicals) aus der Gruppe der Nonylphenylethoxylate
- Tergitol 15 S7 und Tergitol 15 S9 (von DOW Chemicals) aus der Gruppe der Sekundäralkoholethoxylate
- Triton X45 und Triton X114 (von DOW Chemicals) aus der Gruppe der Octylphenylethoxylate
- Brij 30 aus der Gruppe der Polyethylenlauryläther
- Tween 20 aus der Gruppe der Sorbitanester

Die hier vorliegende Erfindung beschreibt neben diversen neuen Strukturelementen zum Design diagnostischer, mikrofluidischer Probenträger auch den generellen dreidimensionalen Aufbau solcher Probenträger hinsichtlich des Hydrophilierungsgrades verschiedener funktioneller Ebenen. Letztendlich werden Gradienten der freien Oberflächenenergie zur Optimierung der Fluidik und der Stopfunktionen vorgeschlagen. Es mag zunächst widersinnig klingen, dass auch die Verteilerkanäle und/oder die Zulaufkanäle teilweise, meist aber mit Ausnahme des Kapillarbodens überwiegend, hydrophob gestaltet sind, da sie von wässrigen Medien ohne Zusätze nicht benetzt werden können. Dies ist aber gewollt. Setzt man dem Probenmedium eine geringe Konzentration eines geeigneten Tensides wie oben beschrieben hinzu, besitzt das Fluid genügend freie Oberflächenenergie um hydrophobe Strukturen zu benetzen. Für diagnostische Zwecke kommen in erster Linie die beschriebenen nichtionischen Tenside in Betracht, da sie allenfalls gering toxisch sind. Nichtionische Tenside werden, wie schon erwähnt, als Zusätze bei vielen diagnostischen und biotechnologischen Verfahren benutzt, vor allem sind sie jedoch als Emulgatoren oder Löslichkeitsvermittler in pharmazeutischen Produkten, oder zusätzlich auch als Netzmittel in Waschmitteln, Reinigern, Färbemitteln usw. verbreitet. Meist sind diese Substanzen, die chemisch sehr heterogen sind, assymetrisch aufgebaut, d.h. sie haben z.B. einen hydrophilen Kopf und einen hydrophoben Schwanz. Es gibt jedoch auch symmetrisch aufgebaute Kopolymere (EO/PO- Verbindungen), mit hydrophobem Kern und hydrophilen Enden. Nicht alle Tenside haben jedoch gute benetzende Eigenschaften. Das sind nahezu alle Substanzen, die als Emulgatoren (niedrige HLB- Zahl = hydrophilic- lipophilic- balance) oder Löslichkeitsvermittler (hohe HLB-Zahl) benutzt werden. Gute Netzmittel sind Substanzen mit einer HLB-Zahl zwischen 9 und 13, wie die oben beschriebenen Tenside. Auch innerhalb dieser Substanzen gibt es ungeeignete, da stark schäumende Verbindungen. Geeignet sind Verbindungen, die bei möglichst geringer Konzentration eine optimale Netzwirkung haben und nicht oder nur geringfügig schäumen (siehe die oben beschriebenen Substanzen). Eine Eigenschaft guter Netzmittel ist, dass sie an der Grenzfläche zwischen Fluid und fester Oberfläche aus der Lösung gehen und an der Oberfläche adsorbiert werden. Die Konzentration im Fluid nimmt also proportional zur benetzten Oberfläche ab, bis eine kritische Grenze unterschritten ist. Die beschriebene geeignete Substanz Pluronic 10300 der BASF ist in der Lage, bei einer 0,03%ige Konzentration von Pluronic 10300 in wässrigen Medien dem Fluid ausreichend freie Oberflächenenergie zu geben um die Verteilerkanäle zu benetzen. Dabei fließt die Flüssigkeit zunächst deutlich langsamer durch die Kanäle als in einer Struktur, bei der die Kanäle komplett hydrophil gestaltet sind. An der Einlaufkante (Einlaufkapillare) in eine Testvertiefung (z.B. Reaktionskammer) stößt die Flüssigkeit dann an eine Grenzfläche von hydrophoben Strukturen nach oben und hydrophilen Strukturen nach unten. Die Kapillarität nach unten wird jetzt nicht nur wegen der vertikalen Kapillare, sondern auch durch die energetischen Bedingungen bevorzugt. Die Flüssigkeit gelangt schnell zum Boden, benetzt diesen und steigt in der Testvertiefung (z.B. Reaktionskammer) rasch an bis sie die hydrophobe Schicht (zunächst in der Nähe der Einlaufkante/Einlaufkapillare) erreicht. Dabei wird die Benetzung der verbleibenden Oberfläche verlangsamt. Die Benetzung der Siegelschicht erfolgt von der Einlaufkante/Einlaufkapillare in Richtung Entlüftungskapillare mit soviel Verzögerung, dass sämtliche Luft entweichen kann. In der komplett hydrophoben Entlüftungsstruktur wird die Flüssigkeit, die jetzt nur noch eine geringe Konzentration an Tensid enthält, durch die Kombination der Strukturelemente und den energetisch ungünstigen Bedingungen gestoppt. Mit einer anderen Substanz (Tergitol NP9) konnte sogar ein unbehandelter, also hydrophober, Probenträger aus Polystyrol fehlerfrei gefüllt werden, wenn die Siegelschicht die eingangs beschriebenen Eigenschaften hat, also noch hydrophober ist als der Probenträger selbst. War die Siegelschicht hydrophiler (z.B. Acrylatkleber), so kapillarisierte das Fluid entlang der Kanten zwischen Probenträger und Siegelschicht. Die Testvertiefungen (z.B. Reaktionskammern) wurden nicht gefüllt.

Abschließend ist erfindungsgemäß ein Kitt für die mikrobiologische Diagnostik, der Immunologie, der PCR (polymerase chain reaction, Polymerase-Kettenreaktion), der klinischen Chemie, der Mikroanalytik und/oder der Prüfung von Wirkstoffen enthaltend einen erfindungsgemäßen Probenträger vorgesehen.

Weitere Einzelheiten und Merkmale der Erfindung ergeben sich aus der nachfolgenden Beschreibung von bevorzugten Ausführungsbeispielen in Verbindung mit den Unteransprüchen. Hierbei können die jeweiligen Merkmale für sich alleine oder zu mehreren in Kombination miteinander verwirklicht sein. Die Erfindung ist nicht auf die Ausführungsbeispiele beschränkt.

Die Ausführungsbeispiele sind in den Figuren schematisch dargestellt. Gleiche Bezugsziffern in den einzelnen Figuren bezeichnen dabei gleiche oder funktionsgleiche bzw. hinsichtlich ihrer Funktionen einander entsprechende Elemente. Im Einzelnen zeigt:
- Fig. 1: Zeigt eine Aufsicht auf eine schematische Darstellung eines Probenträgers.
- Fig. 2: Zeigt eine perspektivische Seitenansicht auf eine schematische Darstellung eines Probenträgers.
- Fig. 3: Zeigt schematisch das Entstehen von Mikrowülsten am Übergang zwischen Seitenwänden und Deckelkörper
- Fig. 4: Schematische Darstellung einer vorteilhaften Ausfüh- rungsform des Probenträgers
- Fig. 5: Fig. 5A - 5C zeigen vorteilhafte Ausgestaltungen der zusätzlichen Struktur
- Fig. 6: Schematische Darstellung einer vorteilhaften Ausfüh- rungsform des Probenträgers zur Durchführung von auf- einander folgenden Assays
- Fig. 7: Fig. 7A - 7C zeigen vorteilhafte Anordnungen des Pro- benträgers
- Fig. 8: Fig. 8A - 8D zeigen vorteilhafte Ausgestaltungen der Reaktionskammer
- Fig. 9: Schematische Darstellung der Seitenwände der Reakti- onskammer
- Fig. 10: Schematische Darstellung der Erstreckung der Seiten- wände der Reaktionskammer
- Fig. 11: Schematische Darstellung einer vorteilhaften Anordnung des Probenträgers für (multiparametrische) Einschrit- tassays
- Fig. 12: Schematische Darstellung einer vorteilhaften Anordnung des Probenträgers für 2-Schrittassays
- Fig. 13: Schematische Darstellung einer vorteilhaften Anordnung des Probenträgers für eine PCR

Im Rahmen der Erfindung sind zahlreiche Abwandlungen und Weiterbildungen der beschriebenen Ausführungsbeispiele verwirklichbar.

Bereichsangaben umfassen stets alle - nicht genannten - Zwischenwerte und alle denkbaren Teilintervalle.

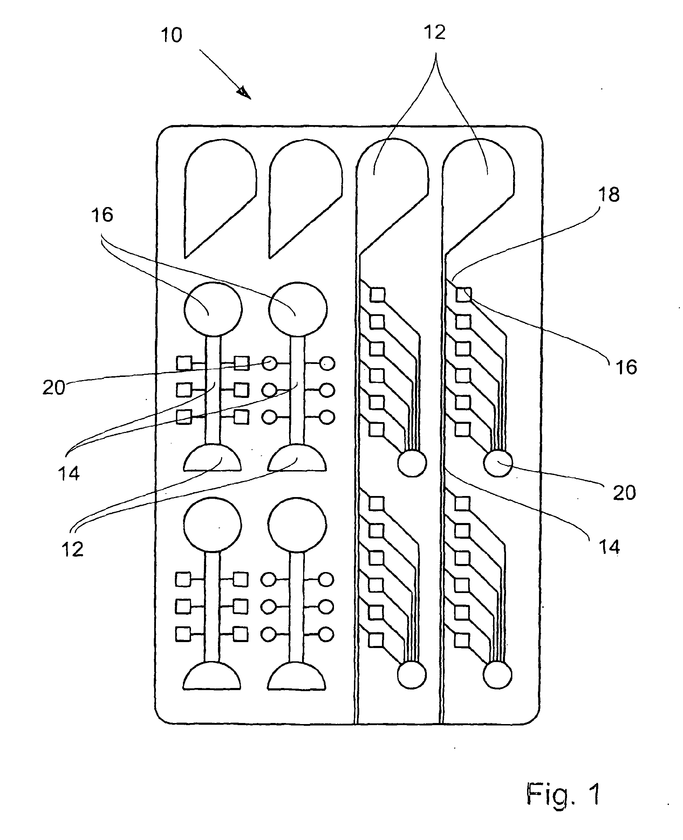

Figur 1 zeigt eine Aufsicht auf eine schematische Darstellung eines Probenträger (10). Zu sehen sind die verschiedenen Ausgestaltungen der Strukturen, abhängig von der konkret auszuführenden Reaktion (linke und rechte Hälfte des Probenträger). Ebenso sind die einzelnen Strukturen, je nach Bedarf, unterschiedlich geometrisch geformt. Konkret erkennt man die Probenaufnahmekammern (12), von denen aus sich ein Verteilerkanal (14) erstreckt, wobei der Verteilerkanal (14) in der linken Hälfte des Probenträgers (10) direkt die Probenaufnahmekammer (12) mit der Reaktionskammer (16) verbindet, während in der rechten Hälfte des Probenträgers (10) zwischen Probenaufnahmekammer (12) und Reaktionskammer (16) noch ein Zulaufkanal (18), der von dem Verteilerkanal (14) abzweigt, zwischengeschaltet ist. Von diesen Reaktionskammern (16) zweigen Entlüftungsstrukturen beziehungsweise Entlüftungskapillare ab, die jeweils in den Entlüftungsöffnungen (20) münden. Der in Figur 1 dargestellte Probenträger (10) stellt die Grundstruktur eines mikrofluidischen Probenträgers dar, ohne dass er die erfindungsgemäßen weiteren zusätzlichen Strukturen, die zumindest teilweise hydrophob ausgestaltet sind, aufweist. Diese zusätzlichen Strukturen werden in den nachfolgenden Figuren beschrieben.

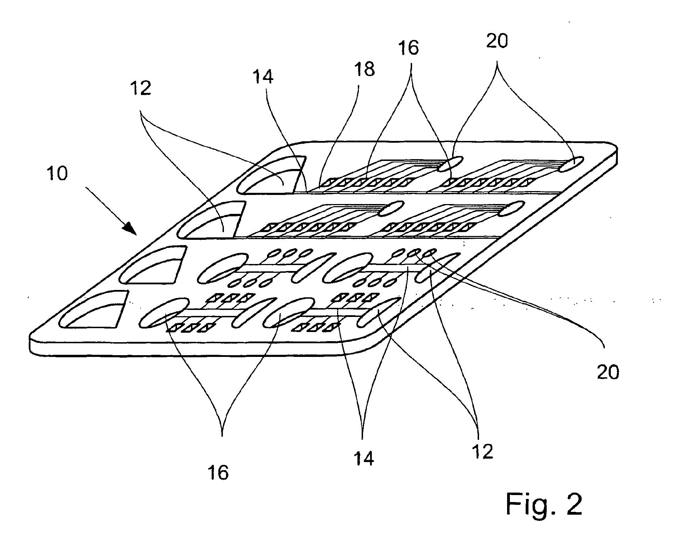

Figur 2 zeigt eine perspektivische Seitenansicht auf eine schematische Darstellung des Probenträgers (10) nach Figur 1. Zu erkennen sind erneut die verschieden ausgestalteten Probenaufnahmekammern (12), die hiervon abzweigenden Verteilerkanäle (14) sowie die Reaktionskammern (16) und die Entlüftungsöffnungen (20). In der rechten Hälfte des Probenträgers (10) zweigen vom Verteilerkanal (14) Zulaufkanäle (18) ab.

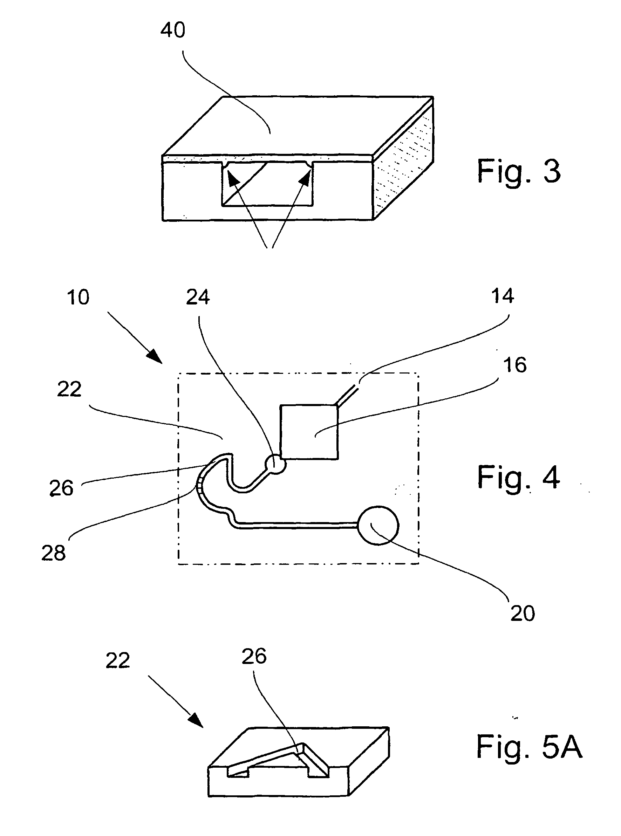

Figur 3 zeigt schematisch das entstehen von Mikrowülsten beim Übergang zwischen Seitenwänden und Deckelkörper. Es hat sich gezeigt, dass bei der Versiegelung des Probenträgers mit einem Deckelkörper (40) vorteilhafte Effekte auftreten, wenn der Deckelkörper einseitig mit einer Klebstoffschicht versehen ist. Wenn es sich bei dieser Klebstoffschicht um einen Kohäsionskleber handelt, können unerwünschte Kapillarkräfte zwischen Seitenwänden und Verdeckelung unterbunden werden. An diesen Stellen, d. h. zwischen Seitenwänden und Verdeckelung, bilden sich " Mikrowülste " (in der Figur 3 durch Pfeile markiert) aus, die dafür sorgen, dass eine Kapillarisierung zwischen Seitenwänden und Deckelkörper unterbunden wird.

Figur 4 zeigt eine schematische Darstellung einer vorteilhaften Ausführungsform des Probenträgers. In dieser Figur erkennt man die zusätzliche Struktur (22), die in diesem Fall zwischen der Reaktionskammer (16) und der Entlüftungsöffnung (20) angeordnet ist. Es handelt sich in Figur 4 bei der zusätzlichen Struktur (22) um eine halbkreisförmige Vertiefung (24), die sich diagonal gegenüber dem Verteilerkanal (14) befindet. Von dieser halbkreisförmigen Vertiefung (24) geht eine weitere Kapillare (26) aus, die in Figur 4 als scharfkantiges Element (28) ausgestaltet ist.

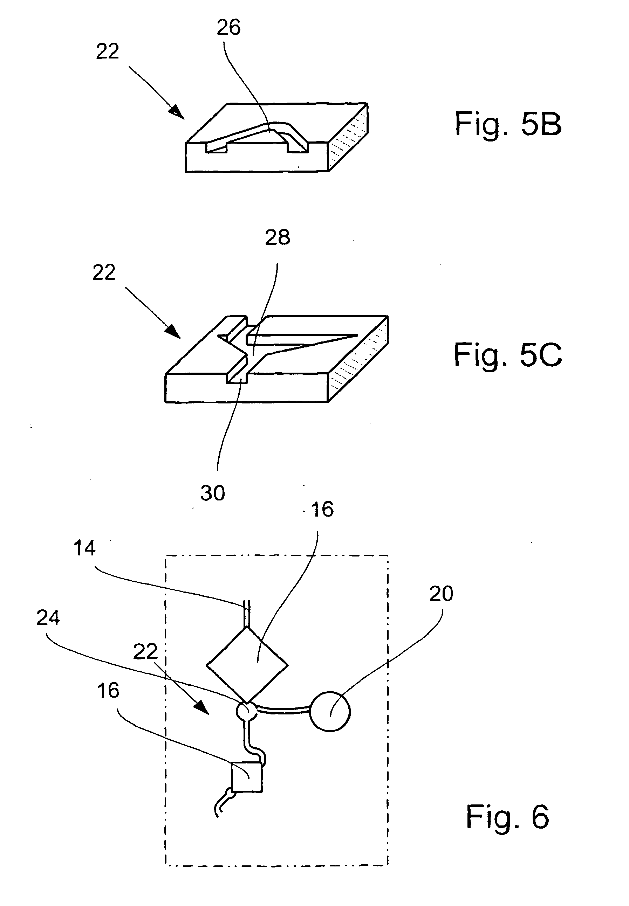

Die Figuren 5A - 5C zeigen vorteilhafte Ausgestaltungen der zusätzlichen Strukturen (22). Hierbei stellt Figur 5A eine zickzackförmig ausgestaltete Struktur dar, während Figur 5B eine scharf abgewinkelte Struktur darstellt, die einen Winkel ≥ 90 Grad aufweist. In der Figur 5C ist ein scharfkantiges und eine wechselnde Strukturtiefe aufweisendes Element (28) dargestellt, von dem aus eine weitere Kapillare (30) ausgeht, die direkt oder über eine benachbarte Struktur in eine endständige Vertiefung mit Ventilfunktion münden kann.

Figur 6 zeigt eine schematische Darstellung einer vorteilhaften Ausführungsform des Probenträgers zur Durchführung von aufeinander folgenden Assays. Zu erkennen ist der Verteilerkanal (14), die beiden unterschiedlich großen Reaktionskammern (16), die zusätzliche Struktur (22), die hier als halbkreisförmige Vertiefung (24) ausgestaltet ist, sowie die Entlüftungskapillare, die die halbkreisförmige Vertiefung (24) mit der Entlüftungsöffnung (20) verbindet. Bei solch einer Anordnung füllt sich die erste Reaktionskammer (16), in der Figur 6 die größere Reaktionskammer, sobald eine Probe aufgegeben wird, sodass der erste Schritt einer Reaktion ablaufen kann. Dies liegt daran, dass die geöffnete Entlüftungsöffnung (20), die seitlich zur ersten Reaktionskammer (16) liegt, lediglich ein Befüllen der größeren Reaktionskammer (16) zulässt. Erst wenn das Entlüftungssystem in der zweiten Reaktionskammer (16) (das in Figur 6 nicht dargestellt wurde) geöffnet wird, kann die Probe aus der größeren Reaktionskammer (16) in die zweite Reaktionskammer (16), die ein geringeres Volumen hat, hinein fließen. Darin kann dann der zweite Schritt einer Reaktion ablaufen.

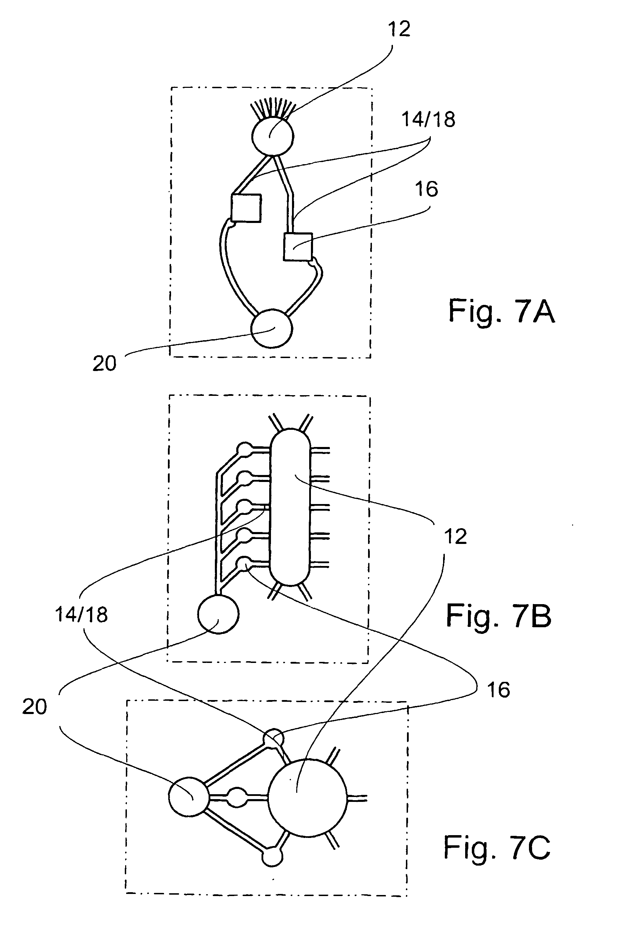

Die Figuren 7A - 7C zeigen vorteilhafte Anordnungen des Probenträgers. Zu sehen ist in Fig. 7A eine "medusenhafte " Anordnung des Probenträgers, wobei der Kopf der Meduse die Probenaufnahmekammer (12) darstellen soll, während die "Tentakeln" die Funktion der Verteiler- und/oder Zulaufkanäle (14/18) übernehmen. Weiterhin ist in Fig. 7A die Reaktionskammer (16) sowie die Entlüftungsöffnung (20) dargestellt. Die Figuren 7B und 7C stellen weitere mögliche Ausgestaltungen des erfindungsgemäßen Probenträgers dar, worin erneut die Probenaufnahmekammer (12) zentral in Form eines Kreises (in Fig. 7C) beziehungsweise einer länglichen Struktur (Figur 7B) geformt ist, und von dieser die Verteiler- und/oder Zulaufkanäle (14/18) abgehen. Die Reaktionskammer (16) sowie die Entlüftungsöffnung (20) sind um die Probenaufnahmekammer (12) angeordnet.

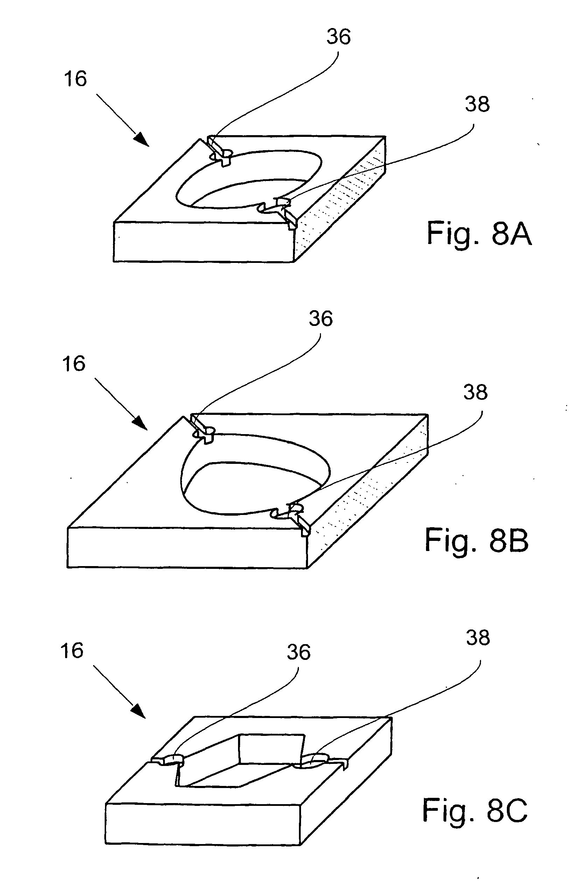

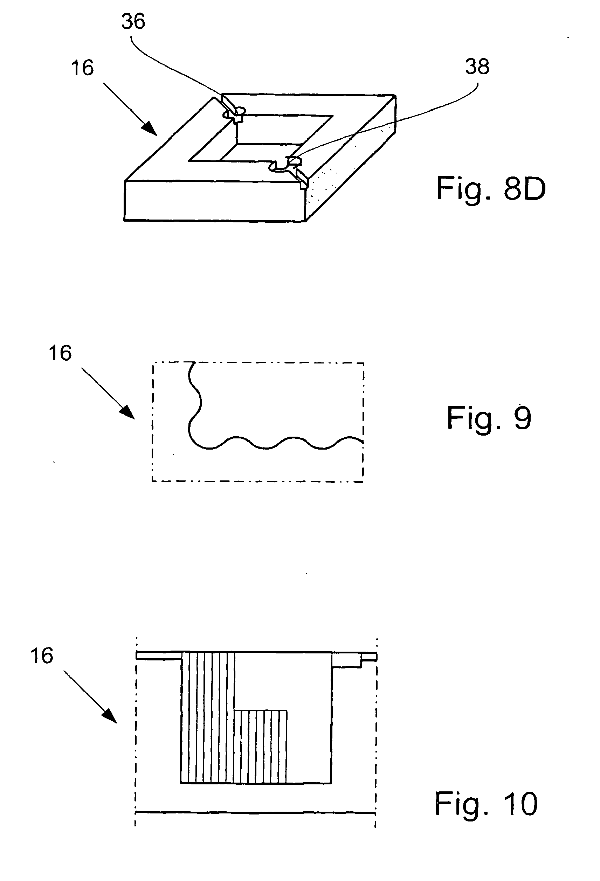

Die Figuren 8A - 8D zeigen vorteilhafte Ausgestaltungen der Reaktionskammer. Hierbei weisen die Reaktionskammern (16) in ihren Querschnitten eine runde (Figur 8A), eine birnenförmige (Figur 8B), eine hexaedrische (Figur 8C) oder eine rechteckige (Figur 8D) Form auf. Weiterhin erkennt man eine Einlaufkapillare (36) sowie eine diagonal gegenüber der Einlaufkapillare (36) angeordneten Einbuchtung (38).

Figur 9 ist eine schematische Darstellung der Seitenwände der Reaktionskammer. Man erkennt die wellig ausgestalteten Seitenwände, die als vertikale Kapillaren bei gleichzeitiger Vergrößerung der Oberfläche durch die Wellenstruktur wirken. Durch diese Anordnung können beim Einbringen von Probensubstanzen in Lösung diese schnell und gleichmäßig auf eine größere Oberfläche verteilt werden, und so den Trocknungsprozess beschleunigen, bei gleichzeitiger " Entlastung" der Einlaufkapillare.

Figur 10 zeigt die schematische Darstellung der Erstreckung der Seitenwände der Reaktionskammern. Die Wellenstruktur der Seitenwände kann sich über verschiedene Bereiche erstrecken. In der Figur 10 ist dargestellt, dass in der Nähe der Einlaufkapillare vom Boden bis zum Deckel sich die Wellenstruktur erstreckt, während sie in der Nähe der Entlüftungsstruktur ganz fehlt. Es hat sich gezeigt, dass bei einer solchen Verteilung der Wellenstruktur die einlaufende Flüssigkeit im Bereich der Einlaufkapillare und der durchgehenden Wellenstruktur den Deckelkörper benetzt und der Verzögerungseffekt im übrigen Teil so stark ist, dass die Luft genügend Zeit hat zu entweichen.

### 1. Einschrittassay

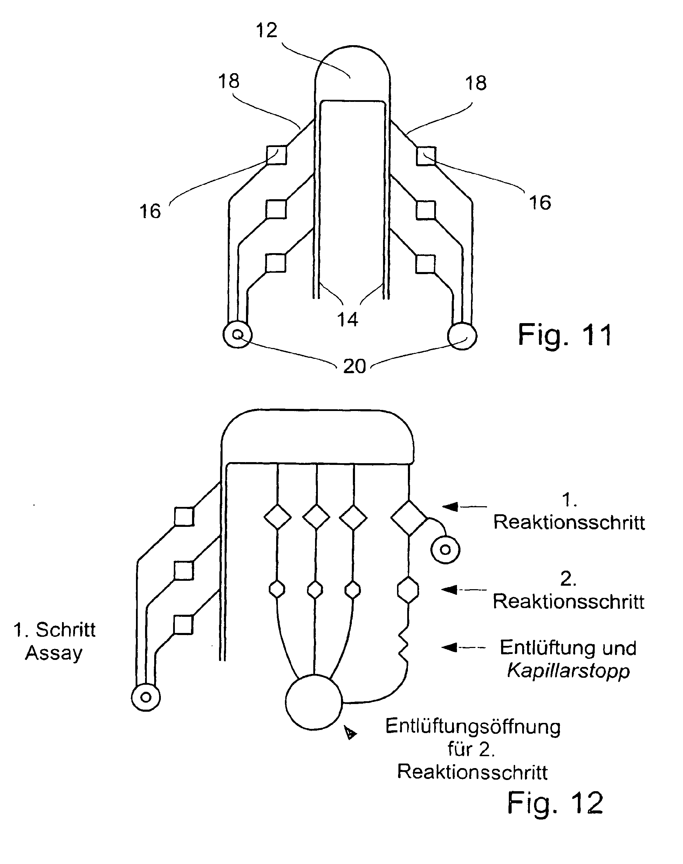

Für (multiparametrische) Einschrittassays (Antigennachweis, mikrobiologische Tests etc.) genügt ein einfacher Aufbau aus Probenaufnahmekammer, Verteiler- und/oder Zulaufkanälen, Reaktionskammern und Entlüftungsöffnungen (inkl. der zuführenden Strukturen). Die endständigen "Entlüftungsventile" bzw. Entlüftungsöffnungen sind dabei geöffnet (siehe Fig. 11).

### Verfahren für Einschrittassays - Antikörpertest

Lässt man bei einem Probenträger wie in der Fig. 11 die Entlüftungsöffnung zunächst geschlossen, so kann man in der Probenaufnahmestelle (12) einen ersten Reaktionsschritt durchführen. Dies soll am Beispiel einfacher Antikörpertests zum Nachweis von z.B. Erregern von Atemwegserkrankungen dargestellt werden. In den Reaktionskammern (16) der einen (linken) Seite befinden sich mit Anti-Human IgA oder Anti-Human IgM beschichtete magnetische Partikel sowie fluoreszenzmarkiertes Antigen (z.B. RSV, Influenza etc.), auf der rechten Seite lediglich die markierten Antigene. In der Probenaufnahmekammer (12) befinden sich mit Anti-Human IgG beschichtete paramagnetische Nanopartikel in einer Konzentration, die ausreichend ist aus einer 1:10 bis 1:50 verdünnten Serumprobe sämtliches IgG zu binden. Ist dieser erste Inkubationsschritt abgeschlossen, legt man an die Probenaufnahmekammer (12) ein starkes Magnetfeld an und öffnet die Entlüftungsöffnung (20) auf der linken Seite. Die Probe strömt nun in die Reaktionskammern (16) ein und IgA bzw. IgM binden an die magnetischen Partikel. Sind spezielle IgM oder IgA vorhanden, binden diese die entsprechenden markierten Antigene. Die Reaktion kann durch 3D-Fluoreszenzscan oder andere optische Detektionssysteme ausgewertet werden. Nachdem die Reaktionskammern (16) auf der linken Seite gefüllt sind, wird das Magnetfeld abgeschaltet und die rechte Entlüftungsöffnung (20) geöffnet. Die Probe mit den Nanopartikeln strömt jetzt in die Reaktionskammern (16) der rechten Seite und nach einem weiteren Inkubationsschritt können nun in vergleichbarer Weise spezielle IgG Antikörper nachgewiesen werden. Das Verfahren eignet sich auch für IgG-Subklassen oder entsprechend modifiziert für IgE Bestimmungen d.h. z.B. für Allergie Bestimmungen.

### 2. 2-Schrittassays

### (Mit oder ohne Einschrittassay)

Fig. 12 zeigt einen Aufbau zur Durchführung von 2-Schrittassays. Der Aufbau kann auch Strukturen zur gleichzeitigen Durchführung von Einschrittassays vorsehen. Gegebenenfalls kann auch eine Probenaufbereitung stattfinden, wenn alle Ventilfunktionen (d.h. alle Entlüftungsöffnungen) geschlossen sind. 2-Schrittassays sind z.B. aus der klinischen Chemie bekannt, wenn z.B. der erste Reaktionsschritt eine enzymatische Reaktion voraussetzt, deren Endprodukt mit einem Reagenz nachgewiesen wird, das mit der Enzymreaktion nicht kompatibel ist. Ein anderes Beispiel wären Reaktionen aus der Gerinnungsdiagnostik, bei denen nur der Überschuss eines Analyten in der Probe nachgewiesen werden soll, also ein gewisser definierter Anteil eines Analyten in einem ersten Schritt, auf welche Art auch immer, inaktiviert werden muss. Bei diesen Assays ist die Kammer für den ersten Schritt etwa fünfmal so groß wie die Testvertiefung für den zweiten Schritt, der erst dann initiiert wird, wenn die endständige Entlüftungsöffnung geöffnet wird. Durch die unterschiedliche Größe wird gewährleistet, dass nur Material in die zweite Kammer gelangt, bei dem der erste Schritt erfolgt ist.

### Sondererfall: Antikörpernachweis

Wenn der Probenträger zum Nachweis von Antikörpern dienen soll und sich in der ersten Kammer z.B. Antigen beschichtete Beads befinden, ist die erste Kammer deutlich kleiner als die zweite Kammer. Diese dient dann lediglich als "Abfallbehälter" für die Proben und Waschlösungen. Über die endständige Entlüftungsöffnung lassen sich diese Schritte durch Öffnen und Schließen leicht kontrollieren.

### Sonderfall: PCR-Probenträger

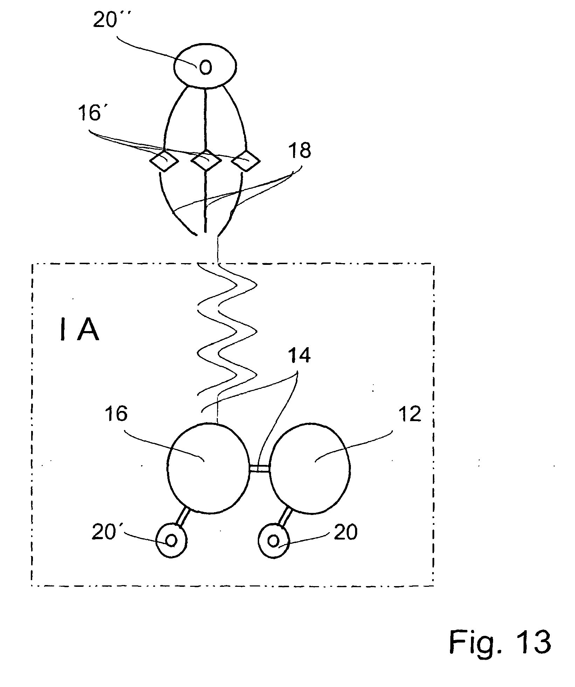

Fig. 13 zeigt den Sonderfall eines PCR-Probenträgers. Der Probenträger erlaubt die Durchführung einer PCR, gegebenenfalls auch der Isolierung von DNA/RNA und die anschließende Detektion der Targets, gegebenenfalls nach einer zweiten spezifischen PCR. Der Probenträger ist ca. 2-3 mm dick und bis auf eine 50 µm - 100 µm dicke Zwischenschicht hydrophob ausgestaltet. Der Boden des Probenträgers besteht im vorderen Teil (I A) aus einer dünnen kunststoffbeschichteten Metallfolie, im hinteren Teil aus thermostabilem Kunststoff. Der Deckel ist eine Klebstoff beschichtete hoch elastische Folie. Die Probenaufnahmekammer (12) (20 - 100 µl) dient der Probenvorbereitung. Sie wird bei der Injektion der Probe über einen einfachen Entlüftungskanal und eine geöffnete Entlüftungsöffnung (20) entlüftet. Die Vertiefung (12) kann alle Reagenzien enthalten, die für die Isolierung erforderlich sind. Materialien, die nicht auf einen Folgeprozess übertragen werden sollten, sind an eine feste Phase (beispielsweise magnetische Partikel) gebunden. Ist die Isolierung abgeschlossen, wird die Entlüftungsöffnung (20') geöffnet und die Entlüftungsöffnung (20) mechanisch geschlossen, die Probe (ggf. unterstützt durch Erwärmung) fließt über einen Verteilerkanal (14) in die Reaktionskammer (16). In der Reaktionskammer (16) befinden sich alle Reagenzien zur Durchführung einer PCR, falls zur Optimierung der Methode erforderlich teilweise an festen Phasen gebunden. Nach erfolgter PCR (multiplex oder spezifisch) wird die Entlüftungsöffnung (20") geöffnet und das Amplifikat kann über Kanalsysteme in die Reaktions- bzw. Detektionskammern (16') gelangen. Der Verteilerkanal (14) ist zunächst mäanderförmig und komplett hydrophob, danach verjüngt er sich, wird aber tiefer und kommt in seinem unteren Teil in eine hydrophile Schicht zu liegen. Die noch engeren Zulaufkanäle (18) sind im unteren Teil ebenfalls hydrophob. Die Mäanderstruktur des hydrophoben Verteilerkanals (14) und das geschlossene Ventil bzw. die geschlossene Entlüftungsstruktur (20") verhindern einen vorzeitigen Übertritt von der Reaktionskammer (16) in die Detektionskammern (16'). Während der PCR sind auch die Entlüftungsöffnungen (20) und (20') von außen geschlossen. Die Entlüftungskapillaren sind einzeln mit der Entlüftungsöffnung (20") verbunden und enthalten Kapillarstoppstrukturen, wie bereits an anderer Stelle beschrieben. In den Kammern (16'), die verschiedene geometrische Formen haben können, kann wahlweise eine zweite PCR durchgeführt werden oder der Nachweis direkt erfolgen. Hierzu können wiederum Fänger oder Nachweissonden (z. B. Hairpins) an Beads gebunden sein. Auf die Vielzahl von Variationen soll hier nicht näher eingegangen werden.

### Bezugszeichen

- 10: Probenträger
- 12: Probenaufnahmekammer
- 14: Verteilerkanal
- 16: Reaktionskammer
- 18: Zulaufkanal
- 20: Entlüftungsöffnung
- 22: zusätzliche Strukturen
- 24: halbkreisförmige Vertiefung
- 26: Kapillare
- 28: scharfkantige Element
- 30: zusätzliche Kapillare
- 36: Einlaufkapillare
- 38: Einbuchtung
- 40: Deckelkörper

## Patentansprüche

1. Probenträger (10) mit
- mindestens einer Probenaufnahmekammer (12) für eine Probenflüssigkeit,
- mindestens einem Verteilerkanal (14), der mit der mindestens einen Probenaufnahmekammer (12) verbunden ist, wobei sich von jeder Probenaufnahmekammer (12) mindestens ein Verteilerkanal (14) erstreckt,
- mindestens einer Reaktionskammer (16), in die ein von dem mindestens einen Verteilerkanal (14) abzweigender Zulaufkanal (18) mündet, und
- mindestens einer Entlüftungsöffnung (20) für jede Reaktionskammer (16),
- **dadurch gekennzeichnet, dass** der Probenträger (10) zwischen Probenaufnahmekammer (12), Verteilerkanal (14), Reaktionskammer (16), Zulaufkanal (18) und/oder Entlüftungskanal (20) mindestens eine weitere zusätzliche Struktur (22) aufweist, die zumindest teilweise hydrophob ausgestaltet ist, und
- der Verteilerkanal (14) und/oder Zulaufkanal (18) in seinem oberen Bereich in einer Ebene mit der Entlüftungsöffnung (20) liegt und in diesem Bereich hydrophob ausgestaltet ist, während er in seinem unteren, unterhalb der Entlüftungsöffnung (20) liegenden Bereich, hydrophil ausgestaltet ist, und
- die Reaktionskammer (16) in ihrem oberen, in einer Ebene mit dem hydrophoben Teil des Verteilerkanals (14) und/oder Zulaufkanals (18) liegenden Bereichs, hydrophob ausgestaltet ist, während sie in ihrem unteren, unterhalb des hydrophoben Bereichs des Verteilerkanals (14) und/oder des Zulaufkanals (18) liegenden Bereichs, hydrophil ausgestaltet ist, oder
- die Reaktionskammer (16) durchgängig hydrophob ausgestaltet ist.

2. Probenträger nach Anspruch 1, **dadurch gekennzeichnet, dass** bei hydrophil ausgestalteter Reaktionskammer (16) die Hydrophilierung im unteren Bereich der Reaktionskammer (16) schichtweise zunimmt.

3. Probenträger nach einem der vorhergehenden Ansprüche, **dadurch gekennzeichnet, dass** jede weitere Struktur (22) einen Querschnitt von 10 µm bis 300 µm hat.

4. Probenträger nach einem der vorhergehenden Ansprüche, **dadurch gekennzeichnet, dass** es sich bei der zusätzlichen Struktur (22) um eine halbkreisförmige Vertiefung (24) handelt, die diagonal gegenüber dem Verteilerkanal (14) angeordnet ist.

5. Probenträger nach Anspruch 4, **dadurch gekennzeichnet, dass** sich von der halbkreisförmigen Vertiefung (24) mindestens eine weitere Kapillare (26)erstreckt, wobei die weitere Kapillare (26) scharf abgewinkelt und/oder zickzackförmig ausgestaltet ist.

6. Probenträger nach Anspruch 5, **dadurch gekennzeichnet, dass** sich von der weiteren Kapillare (26) mindestens ein weiteres, scharfkantiges und eine wechselnde Strukturtiefe aufweisendes Element (28), erstreckt.

7. Probenträger nach Anspruch 6, **dadurch gekennzeichnet, dass** sich von dem scharfkantigem und eine wechselnde Strukturtiefe aufweisendem Element (28) mindestens eine weitere Kapillare (30) erstreckt, wobei die weitere Kapillare (30) entweder direkt oder über eine benachbarte Struktur in eine endständige Vertiefung mit Ventilfunktion mündet.

8. Probenträger nach einem der vorhergehenden Ansprüche, **dadurch gekennzeichnet, dass** der Verteilerkanal (14), der mit der Probenaufnahmekammer (12) verbunden ist, mäanderförmig ausgestaltet ist.

9. Probenträger nach einem der vorhergehenden Ansprüche, **dadurch gekennzeichnet, dass** mehrere Entlüftungsöffnungen (20), Verteilerkanäle (12), Zulaufkanäle (14), Reaktionskammern (16) und/oder zusätzliche Strukturen (22) um die Probenaufnahmekammer (12) oder parallel zu dieser angeordnet sind.

10. Probenträger nach einem der vorhergehenden Ansprüche, **dadurch gekennzeichnet, dass** die Reaktionskammer (16) eine vertikale Ausdehnung von 500 µm bis 3 mm aufweist.

11. Probenträger nach Anspruch 10, **dadurch gekennzeichnet**, das die Kantenlänge einer Reaktionskammer (16) einen Durchschnitt von 300 µm bis 1 mm aufweist.

12. Probenträger nach einem der Ansprüche 10 oder 11, **dadurch gekennzeichnet, dass** die Reaktionskammer (16) in ihrem Querschnitt rund, birnenförmig, hexaedrisch, oktaedrisch und/oder rechteckig ausgestaltet ist.

13. Probenträger nach einem der Ansprüche 10 bis 12, **dadurch gekennzeichnet, dass** die Reaktionskammer (16) eine vertikal verlaufende und abgerundete Einlaufkapillare (36) im Bodenbereich aufweist.

14. Probenträger nach Anspruch 13, **dadurch gekennzeichnet, dass** die Einlaufkapillare (36) einen Radius von 5 µm bis 50 µm aufweist.

15. Probenträger nach einem der Ansprüche 10 bis 14, **dadurch gekennzeichnet, dass** die Reaktionskammer (16) eine Einbuchtung (38) aufweist, die diagonal gegenüber der Einlaufkapillare (36) angeordnet ist und zu mindestens einer Entlüftungsöffnung (20) führt.

16. Probenträger nach einem der Ansprüche 12 bis 15, **dadurch gekennzeichnet, dass** die Reaktionskammer (16) mindestens eine abgerundete Ecke aufweist.

17. Probenträger nach einem der Ansprüche 10 bis 16, **dadurch gekennzeichnet, dass** die Reaktionskammer (16) glatte und/oder wellig ausgestaltete Seitenwände aufweist.

18. Probenträger nach einem der vorhergehenden Ansprüche, **dadurch gekennzeichnet, dass** der Probenträger (10) durch einen Deckelkörper (40) flüssigkeitsdicht abgedeckt ist.

19. Probenträger nach Anspruch 18, **dadurch gekennzeichnet, dass** der Deckelkörper (40) eine Folie ist, die einseitig mit einer Klebstoffschicht geeigneter Dicke versehen ist.

20. Probenträger nach Anspruch 19, **dadurch gekennzeichnet, dass** es sich bei der Folie und/oder Klebstoff um hitzeaktivierbare und/oder drucksensitive Folien bzw. Klebstoffe handelt.

21. Probenträger nach Anspruch 19 oder 20, **dadurch gekennzeichnet, dass** die Folie unter Druck mittels Walzen so aufgebracht wird, dass der Probenträger (10) eine lückenlose Abdeckung aufweist.

22. Probenträger nach einem der Ansprüche 19 bis 21, **dadurch gekennzeichnet, dass** es sich bei der Folie um eine Fluorpolymerfolie handelt.

23. Probenträger nach Anspruch 20, **dadurch gekennzeichnet, dass** es sich bei den Klebstoffen um Kohäsionskleber handelt.

24. Probenträger nach Anspruch 23, **dadurch gekennzeichnet, dass** es sich um hydrophobe Klebstoffe handelt.

25. Probenträger nach Anspruch 24, **dadurch gekennzeichnet, dass** es sich bei dem Klebstoff um ein Silikon, Kautschuk, Silikon-Kautschuk, und/oder Fluorpolimer-Klebstoff handelt.

26. Verwendung eines Probenträgers nach einem der vorhergehenden Ansprüche in der mikrobiologischen Diagnostik, Immunologie, der PCR (polymerase chain reaktion, Polymerase-Kettenreaktion), der klinischen Chemie, der Mikroanalytik und/oder der Prüfung von Wirkstoffen.

27. Verfahren zur Analyse mindestens einer Probensubstanz, **dadurch gekennzeichnet, dass** ein Probenmedium mit mindestens einem Tensid versetzt und auf einem Probenträger nach einem der Ansprüche 1 bis 25 aufgetragen wird.

28. Verfahren nach Anspruch 27, **dadurch gekennzeichnet, dass** es sich bei dem Tensid um ein nichtionisches Tensid handelt.

29. Verfahren nach Anspruch 28, **dadurch gekennzeichnet, dass** es sich bei dem nichtionischen Tensid um eine Substanz mit einer HLB-Zahl zwischen 9 bis 13 handelt.

30. Verfahren nach Anspruch 29, **dadurch gekennzeichnet, dass** es sich bei dem Tensid um ein Propylenoxid/Ethylenoxid Triblockpolymer, ein Alkylpolyglykosid, ein Nonylphenylethoxylat, ein Sekundäralkoholethoxylat, ein Octylphenylethoxylat, ein Polyethylenlauryläther und/oder ein Sorbitanester handelt.

31. Kitt für die mikrobiologischen Diagnostik, Immunologie, der PCR (polymerase chain reaktion, Polymerase-Kettenreaktion), der klinischen Chemie, der Mikroanalytik und/oder der Prüfung von Wirkstoffen enthaltend einen Probenträger nach einem der Ansprüche 1 bis 25.

## Claims

1. A sample holder (10) having
- at least one sample receiving chamber (12) for a sample fluid,
- at least one distributor channel (14) that is connected to the at least one sample receiving chamber (12), at least one distributor channel (14) extending from each sample receiving chamber (12),
- at least one reaction chamber (16) into which an inlet channel (18) branching off from the at least one distributor channel (14) opens, and
- at least one vent opening (20) for each reaction chamber (16),
**characterized in that** between the sample receiving chamber (12), distributor channel (14), reaction chamber (16), inlet channel (18) and/or vent opening (20) the sample holder (10) has at least one further additional structure (22) that is at least partially of hydrophobic design, and
- in its upper region the distributor channel (14) and/or the inlet channel (18) lies in a plane with the vent opening (20), and is of hydrophobic design in this region, whereas in its lower region, lying beneath the vent opening (20), it is of hydrophilic design, and
- in its upper region lying in a plane with the hydrophobic part of the distributor channel (14) and/or inlet channel (18) the reaction chamber (16) is of hydrophobic design, whereas in its lower region, lying beneath the hydrophobic region of the distributor channel (14) and/or inlet channel (18), it is of hydrophilic design or
- the reaction chamber (16) is of generally hydrophobic design.

2. The sample holder as claimed in claim 1, **characterized in that** in the case of a reaction chamber (16) of hydrophilic design, the hydrophilization increases in layerwise fashion in the lower region of the reaction chamber (16).

3. The sample holder as claimed in one of the preceding claims, **characterized in that** each further structure (22) has a cross section of 10 µm to 300 µm.

4. The sample holder as claimed in one of the preceding claims, **characterized in that** the additional structure (22) is a semicircular depression (24) that is arranged diagonally opposite the distributor channel (14).

5. The sample holder as claimed in claim 4, **characterized in that** at least one further capillary (26) extends from the semicircular depression (24), the further capillary (26) being designed in a fashion sharply angled away and/or in a zigzag fashion.

6. The sample holder as claimed in claim 5, **characterized in that** extending away from the further capillary (26) is at least one further element (28), which is sharp edged and has a changing structural depth.

7. The sample holder as claimed in claim 6, **characterized in that** at least one further capillary (30) extends away from the element (28) which is sharp edged and has a changing structural depth, the further capillary (30) opening directly or via a neighboring structure into a terminal depression having a valve function.

8. The sample holder as claimed in one of the preceding claims, **characterized in that** the distributor channel (14), which is connected to the sample receiving chamber (12), is of the meandering design.

9. The sample holder as claimed in one of the preceding claims, **characterized in that** a number of vent openings (20), distributor channels (14), inlet channels (14), reaction chambers (16) and/or additional structures (22) are arranged around the sample receiving chamber (12) or parallel thereto.

10. The sample holder as claimed in one of the preceding claims, **characterized in that** the reaction chamber (16) has a vertical extent of 500 µm to 3 mm.

11. The sample holder as claimed in claim 10, **characterized in that** the edge length of the reaction chamber (16) has an average of 300 µm to 1 mm.

12. The sample holder as claimed in either of claims 10 and 11, **characterized in that** the cross section of the reaction chamber (16) is of essentially round, pear shaped, hexahedral, octahedral and/or rectangular design.

13. The sample holder as claimed in one of claims 10 to 12, **characterized in that** the reaction chamber (16) has a vertically running and rounded inlet capillary (36) in the bottom region.

14. The sample holder as claimed in claim 13, **characterized in that** the inlet capillary (36) has a radius of 5 µm to 50 µm.

15. The sample holder as claimed in one of claims 10 to 14, **characterized in that** the reaction chamber (16) has an indentation (38) that is arranged diagonally opposite the inlet capillary (36) and leads to at least one vent opening (20).

16. The sample holder as claimed in one of claims 12 to 16, **characterized in that** the reaction chamber (16) has at least one rounded corner.

17. The sample holder as claimed in one of claims 10 to 15, **characterized in that** the reaction chamber (16) has sidewalls of smooth and/or corrugated design.

18. The sample holder as claimed in one of the preceding claims, **characterized in that** the sample holder (10) is covered in a fluid-tight fashion by a cover element (40).

19. The sample holder as claimed in claim 18, **characterized in that** the cover element (40) is a film that is provided on one side with an adhesive layer of suitable thickness.

20. The sample holder as claimed in claim 19, **characterized in that** the film and/or adhesive is a heat activatable and/or pressure sensitive film or adhesive.

21. The sample holder as claimed in claim 19 or 20, **characterized in that** the film is applied under pressure by means of rolls such that the sample holder (10) has a gapless covering.

22. The sample holder as claimed in one of claims 19 to 21, **characterized in that** the film is a fluoropolymer film.

23. The sample holder as claimed in claim 20, **characterized in that** the adhesives are cohesive adhesives.

24. The sample holder as claimed in claim 23, **characterized in that** hydrophobic adhesives are concerned.

25. The sample holder as claimed in claim 24, **characterized in that** the adhesive is a silicone, rubber, silicone rubber, and/or fluoropolymer adhesive.

26. The use of a sample holder as claimed in one of the preceding claims in microbiological diagnostics, immunology, PCR (polymerase chain reaction), clinical chemistry, microanalytics and/or the testing of active substances.

27. A method for analyzing at least one sample substance, **characterized in that** a sample medium has at least one surfactant added to it and is applied to a sample holder as claimed in one of claims 1 to 25.

28. The method as claimed in claim 27, **characterized in that** the surfactant is a nonionic surfactant.

29. The method as claimed in claim 28, **characterized in that** the nonionic surfactant is a substance with an HLB number between 9 and 13.

30. The method as claimed in claim 29, **characterized in that** the tenside is a propylene oxide/ethylene oxide triblock polymer, an alkyl polyglycoside, a nonylphenylethoxylate, a secondary alcohol ethoxylate, an octyl phenylethoxylate, a polyethylene lauryl ether and/or a sorbitan ester.

31. A kit for microbiological diagnostics, immunology, PCR (polymerase chain reaction), clinical chemistry, microanalytics and/or the testing of active substances including a sample holder as claimed in one of claims 1 to 25.

## Revendications

1. Porte-échantillons (10) avec
- au moins une chambre de réception d'échantillon (12) pour un liquide échantillon,
- au moins un canal de distribution (14), qui est relié à ladite au moins une chambre de réception d'échantillon (12), au moins un canal de distribution (14) s'étendant à partir de chaque chambre de réception d'échantillon (12),
- au moins une chambre de réaction (16), dans laquelle débouche un canal d'arrivée (18) dérivé dudit au moins un canal de distribution (14), et
- au moins une ouverture d'aération (20) pour chaque chambre de réaction (16),
**caractérisé en ce que**
- le porte-échantillons (10) présente, entre la chambre de réception d'échantillon (12), le canal de distribution (14), la chambre de réaction (16), le canal d'arrivée (18) et/ou le canal d'aération (20), au moins une autre structure supplémentaire (22), qui est au moins partiellement rendue hydrophobe, et
- le canal de distribution (14) et/ou le canal d'arrivée (18) est situé dans sa région supérieure dans un plan avec l'ouverture d'aération (20) et est rendu hydrophobe dans cette région, tandis qu'il est rendu hydrophile dans sa région inférieure située en dessous de l'ouverture d'aération (20), et
- la chambre de réaction (16) est rendue hydrophobe dans sa région supérieure située dans un plan avec la partie hydrophobe du canal de distribution (14) et/ou du canal d'arrivée (18), tandis qu'elle est rendue hydrophile dans sa région inférieure située en dessous de la région hydrophobe du canal de distribution (14) et/ou du canal d'arrivée (18), ou
- la chambre de réaction (16) est rendue entièrement hydrophobe.

2. Porte-échantillons selon la revendication 1, **caractérisé en ce que**, lorsque la chambre de réaction (16) est rendue hydrophile, l'hydrophilisation augmente par couches dans la région inférieure de la chambre de réaction (16).

3. Porte-échantillons selon l'une quelconque des revendications précédentes, **caractérisé en ce que** chaque autre structure (22) présente une section transversale de 10 µm à 300 µm.

4. Porte-échantillons selon l'une quelconque des revendications précédentes, **caractérisé en ce que** la structure supplémentaire (22) est un creux de forme semi-circulaire (24), qui est disposé en diagonale par rapport au canal de distribution (14).

5. Porte-échantillons selon la revendication 4, **caractérisé en ce qu'**au moins un autre capillaire (26) s'étend à partir du creux de forme semi-circulaire (24), dans lequel l'autre capillaire (26) est fortement coudé et/ou réalisé en forme de zigzag.

6. Porte-échantillons selon la revendication 5, **caractérisé en ce qu'**au moins un autre élément (28), à bords vifs et présentant une profondeur de structure variable, s'étend à partir de l'autre capillaire (26).

7. Porte-échantillons selon la revendication 6, **caractérisé en ce qu'**au moins un autre capillaire (30) s'étend à partir de l'élément (28) à bords vifs et présentant une profondeur de structure variable, dans lequel l'autre capillaire (30) débouche soit directement soit par une structure avoisinante dans un creux terminal avec une fonction de soupape.

8. Porte-échantillons selon l'une quelconque des revendications précédentes, **caractérisé en ce que** le canal de distribution (14), qui est relié à la chambre de réception d'échantillon (12), est de forme sinueuse.

9. Porte-échantillons selon l'une quelconque des revendications précédentes, **caractérisé en ce que** plusieurs ouvertures d'aération (20), canaux de distribution (14), canaux d'arrivée (18), chambres de réaction (16), et/ou structures supplémentaires (22) sont agencés autour de la chambre de réception d'échantillon (12) ou parallèlement à celle-ci.

10. Porte-échantillons selon l'une quelconque des revendications précédentes, **caractérisé en ce que** la chambre de réaction (16) présente une extension verticale de 500 µm à 3 mm.

11. Porte-échantillons selon la revendication 10, **caractérisé en ce que** la longueur des côtés d'une chambre de réaction (16) présente une moyenne de 300 µm à 1 mm.

12. Porte-échantillons selon l'une quelconque des revendications 10 ou 11, **caractérisé en ce que** la chambre de réaction (16) présente une section transversale ronde, piriforme, hexaédrique, octaédrique et/ou rectangulaire.

13. Porte-échantillons selon l'une quelconque des revendications 10 à 12, **caractérisé en ce que** la chambre de réaction (16) présente dans la région du fond un capillaire d'entrée (36) arrondi et orienté verticalement.

14. Porte-échantillons selon la revendication 13, **caractérisé en ce que** le capillaire d'entrée (36) présente un rayon de 5 µm à 50 µm.

15. Porte-échantillons selon l'une quelconque des revendications 10 à 14, **caractérisé en ce que** la chambre de réaction (16) présente un évidement (38), qui est agencé en diagonale par rapport au capillaire d'entrée (36) et qui conduit vers au moins une ouverture d'aération (20).

16. Porte-échantillons selon l'une quelconque des revendications 12 à 15, **caractérisé en ce que** la chambre de réaction (16) présente au moins un angle arrondi.

17. Porte-échantillons selon l'une quelconque des revendications 10 à 16, **caractérisé en ce que** la chambre de réaction (16) présente des parois latérales lisses et/ou de forme ondulée.

18. Porte-échantillons selon l'une quelconque des revendications précédentes, **caractérisé en ce que** le porte-échantillons (10) est couvert de façon étanche au liquide par un corps de couvercle (40).

19. Porte-échantillons selon la revendication 18, **caractérisé en ce que** le corps de couvercle (40) est une feuille, qui est pourvue sur une face d'une couche de colle d'épaisseur appropriée.

20. Porte-échantillons selon la revendication 19, **caractérisé en ce que** la feuille et/ou la colle est/sont des feuilles ou des colles pouvant être activées par la chaleur et/ou sensibles à la pression.

21. Porte-échantillons selon la revendication 19 ou 20, **caractérisé en ce que** la feuille est appliquée sous pression par des rouleaux, de telle manière que le porte-échantillons (10) présente un recouvrement sans faille.

22. Porte-échantillons selon l'une quelconque des revendications 19 à 21, **caractérisé en ce que** la feuille est une feuille de fluoropolymère.

23. Porte-échantillons selon la revendication 20, **caractérisé en ce que** les colles sont des colles cohésives.

24. Porte-échantillons selon la revendication 23, **caractérisé en ce que** ce sont des colles hydrophobes.

25. Porte-échantillons selon la revendication 24, **caractérisé en ce que** la colle est une colle au silicone, au caoutchouc, au silicone-caoutchouc et/ou au fluoropolymère.

26. Utilisation d'un porte-échantillons selon l'une quelconque des revendications précédentes en diagnostic microbiologique, immunologie, PCR (polymerase chain reaction, réaction en chaîne par polymérase), chimie clinique, microanalyse et/ou contrôle de substances actives.

27. Procédé pour l'analyse d'au moins une substance échantillon, **caractérisé en ce que** l'on mélange un fluide échantillon avec au moins un agent tensioactif et on le dépose sur un porte-échantillons selon l'une quelconque des revendications 1 à 25.

28. Procédé selon la revendication 27, **caractérisé en ce que** l'agent tensioactif est un agent tensioactif non ionique.

29. Procédé selon la revendication 28, **caractérisé en ce que** l'agent tensioactif non ionique est une substance présentant un nombre de HLB compris entre 9 et 13.

30. Procédé selon la revendication 29, **caractérisé en ce que** l'agent tensioactif est un polymère tribloc d'oxyde de propylène/oxyde d'éthylène, un polyglucoside d'alkyle, un éthoxylate de nonylphényle, un éthoxylate d'alcool secondaire, un éthoxylate d'octylphényle, un lauryléther de polyéthylène et/ou un ester de sorbitane.

31. Kit pour le diagnostic microbiologique, l'immunologie, la PCR (polymerase chain reaction, réaction en chaîne par polymérase), la chimie clinique, la microanalyse et/ou le contrôle de substances actives, comprenant un porte-échantillons selon l'une quelconque des revendications 1 à 25.
